# EUROPEAN PATENT APPLICATION

(11) **EP 2 431 256 A2**
(43) Date of publication of application: **21.03.2012**
(21) Application number: 11380023.9
(22) Date of filing: 29.03.2011
(51) Int. Cl.: B62B 9/18

(54) **Suspension for baby pushchairs**

(30) Priority: 15.09.2010 ES 201030940 U
(71) Applicant: JANE, S.A., 08184 Palau Solita I Plegamans Barcelona (ES)
(72) Inventor: Jane Santamaria, Manuel, 08184 Palau Solita i Plegamans(Barcelona) (ES)
(74) Representative: Morgades y Manonelles, Juan Antonio

(57) **Abstract**

This invention consists of a suspension system that is a significant improvement over known models, both in simplicity and strength, characterised by the fact that whatever the pressure on the suspension, the wheel remains in correct vertical position at all times. The characteristic feature of this suspension is that it has two longitudinal elements between the frame (1) and the wheel (3) support (2), substantially parallel and their ends are articulated onto the frame and the support, with a damper (10) located between the articulations of the opposite ends of the longitudinal elements. The damper device (10) is a telescopic element with a spring (13) inside it and the longitudinal elements are composed of plates (4,5).

## Description

### OBJECT OF THE INVENTION

Suspension for baby pushchairs.

### BACKGROUND OF THE INVENTION

Several models of suspension for baby pushchairs exist, based principally on the action of a spring, with the spring being placed, for example between the frame and the wheel bracket, or coupled to a support on the wheel axle.

### SUMMARY OF THE INVENTION

This invention consists of a suspension system that is a significant improvement over known models, both in simplicity and strength, characterised by the fact that whatever the pressure on the suspension, the wheel remains in correct vertical position at all times.

The characteristic feature of this suspension is that it has two longitudinal elements between the frame and the wheel support, substantially parallel and their ends are articulated onto the frame and the support, with a damper located between the articulations of the opposite ends of the longitudinal elements.

The damper device is a telescopic element with a spring inside it and the longitudinal elements are composed of plates.

These and other characterizing features will be best made apparent by the following detailed description whose understanding will be made easier by the accompanying sheet of drawings showing a practical embodiment being cited only by way of example not limiting the scope of the present invention.

### DESCRIPTION OF THE DRAWINGS

In the drawings:
Figure 1 shows an elevation view of the suspension assembly object of the invention,
Figure 2 illustrates a perspective view of the suspension assembly, and
Figure 3 shows a perspective front view of the assembly coupled to a frame for fitting this suspension.

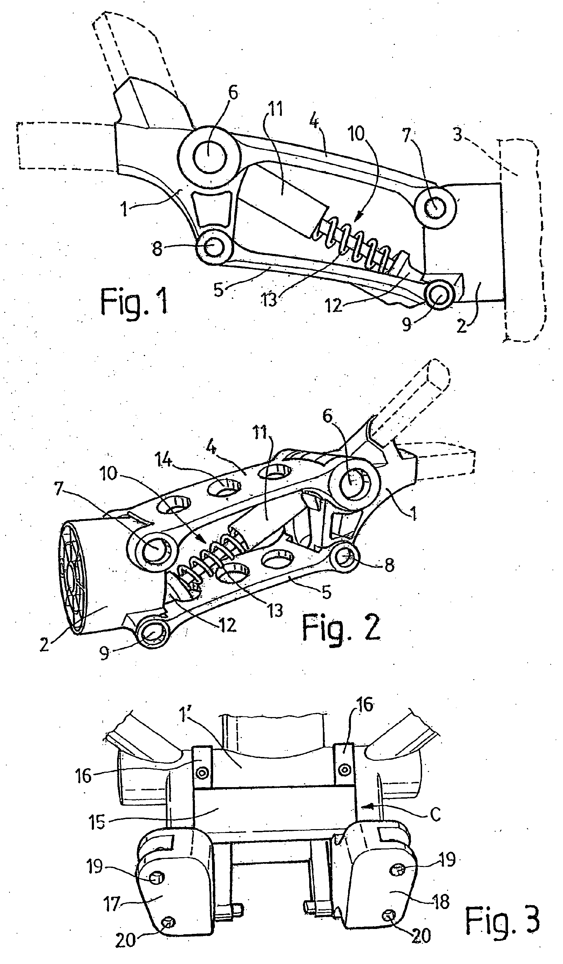

According to the drawings, the suspension forms an assembly comprising, as can be seen in figures 1 and 2, the fitting, between a lower part (1) of the frame and the wheel (3), support (2), an upper plate (4) and a lower plate (5) substantially parallel to each other and that are articulated to the frame and support by the articulations (6 and 7) and (8 and 9) at their ends respectively, a damper (10) device being located between the articulation (6 and 9) of the opposite ends of the plates (4 and 5), comprising a telescopic element formed by the parts (11 and 12) between which is a coil spring (13).

The plates (4 and 5) have holes (14) to reduce their weight.

This suspension may be adapted to different types of existing frames for which purpose an accessory will be fitted to them, to which the suspension will be attached. Figure 3 shows one of these accessories (C) comprising a body (15), secured by clamps (16) to the lower side (1') of the frame, whose body has two arms (17 and 18) with the holes (19 and 20) for the articulation shafts (6 and 8), respectively.

The invention can within its essentiality be put into practice in other embodiments differing only in detail from the one having been described above only by way of example, said other embodiments also falling within the scope of the protection being claimed. This suspension for baby pushchairs for baby pushchairs may thus be manufactured in any shape and size, with the most suitable means and materials and with the most convenient accessories, and the components may be replaced by others that are technically equivalent, as all of this is contained within the spirit of the claims.

## Claims

1. Suspension for baby pushchairs, **characterised in that** it has two longitudinal elements between the frame and the wheel support, substantially parallel to each another and their ends are articulated onto the frame and the support, with a damper located between the articulations of the opposite ends of the longitudinal elements.

2. Suspension for baby pushchairs, according to the claim 1, **characterised in that** the damper device is a telescopic element with a spring inside it.

3. Suspension for baby pushchairs, according to the claim 1, **characterised in that** the longitudinal elements are composed of plates.
